(19) Europäisches Patentamt
European Patent Office
Office européen des brevets

(11) Veröffentlichungsnummer: **0 475 242 B1**

(12) **EUROPÄISCHE PATENTSCHRIFT**

(45) Veröffentlichungstag der Patentschrift: **15.11.95**

(51) Int. Cl.[6]: **C08G 18/48**, C08K 5/09,
C08G 18/38, C08G 18/66,
C08J 9/00, //(C08G18/48,
101:00),(C08G18/66,101:00)

(21) Anmeldenummer: **91114817.9**

(22) Anmeldetag: **03.09.91**

(54) **Verwendung von Alkali- oder Erdalkalisalzen von Hydroxycarbonsäuren zur Herstellung von flexiblen, Urethangruppen aufweisenden Schaumstoffen mit verminderter Stauchhärte.**

(30) Priorität: **13.09.90 DE 4029081**

(43) Veröffentlichungstag der Anmeldung:
**18.03.92 Patentblatt 92/12**

(45) Bekanntmachung des Hinweises auf die Patenterteilung:
**15.11.95 Patentblatt 95/46**

(84) Benannte Vertragsstaaten:
**BE DE DK ES FR IT LU NL SE**

(56) Entgegenhaltungen:
**EP-A- 0 043 952       EP-A- 0 276 956
EP-A- 0 372 292       JP-A-63 301 238
US-A- 3 736 272       US-A- 4 430 490**

**WORLD PATENTS INDEX LATEST Section Ch, Week 8904, Derwent Publications Ltd., London, GB; Class C, AN 89-027825 & JP-A-63 301 239 (HUMAN IND.CORP.) 8. Dezember 1988**

**CHEMICAL ABSTRACTS, vol. 110, no. 10, 15.**

**Mai 1989, Columbus, Ohio, US; abstract no. 174843G, & JP-A-63 301 238**

**Derwent Abstract of JP-A-63301236**

(73) Patentinhaber: **Th. Goldschmidt AG
Goldschmidtstrasse 100
D-45127 Essen (DE)**

(72) Erfinder: **Burkhart, Georg, Dr.
Barkhovenallee 31
W-4300 Essen 16 (DE)**
Erfinder: **Schlöns, Hans-Heinrich
Haverkamp 29a
W-4300 Essen 17 (DE)**
Erfinder: **Zellmer, Volker, Dr.
Horster Strasse 177
W-4250 Bottrop (DE)**

**Beschreibung**

Die Erfindung betrifft die Verwendung von Alkali- oder Erdalkalisalzen von Hydroxycarbonsäuren zur Herstellung von flexiblen, Urethangruppen aufweisenden Schaumstoffen mit verminderter Stauchhärte, die erhalten werden durch Umsetzung von mindestens zwei Hydroxylgruppen aufweisenden Polyethern eines Molekulargewichtes von 400 bis 12 000 mit Polyisocyanaten in Gegenwart von Katalysatoren und Wasser und gegebenenfalls in Gegenwart von Emulgatoren, Stabilisatoren, Vernetzungsmitteln, Treibmitteln und üblichen Hilfs- und Zusatzmitteln.

Die Erfindung betrifft insbesondere ein Verfahren zur Herstellung von flexiblen Polyurethanweichschäumen mit verminderter Stauchhärte, zu dessen Durchführung keine oder gegenüber üblichen Verfahren des Standes der Technik erheblich verminderte Mengen an physikalischen Treibmitteln, wie Fluorchlorkohlenwasserstoffen, Methylenchlorid, Pentan, Aceton und 1,1,1-Trichlorethan, benötigt werden.

Weichelastische Polyurethanschaumstoffe werden in breitem Umfang in der Polstermöbel- und Automobilindustrie verwendet. Für die verschiedenen Einsatzzwecke und die sich daraus ableitenden unterschiedlichen Qualitäten ist es notwendig, neben der Rohdichte in erster Linie die Stauchhärte über einen weiten Bereich variieren zu können.

Um Schaumstoffe mit erhöhter Stauchhärte herzustellen, hat man bereits inerte anorganische oder organische Füllstoffe eingesetzt. Die Stauchhärte kann auch durch Verwendung von sogenannten füllkörperhaltigen Polyolen, hergestellt durch Polymerisationsreaktionen von ungesättigten Monomeren bzw. Additionsreaktionen in den zur Verschäumung dienenden Polyolen, erhöht werden.

Eine Erniedrigung der Stauchhärte wird durch Mitverwendung physikalischer Treibmittel, wie z. B. Fluorchlorkohlenwasserstoffen oder Methylenchlorid, erreicht. Dem steht das Bestreben entgegen, aus Umweltgründen die Verwendung von Fluorchlorkohlenwasserstoffen möglichst weitgehend einzuschränken. Gleiches gilt für das physiologisch nicht unbedenkliche Methylenchlorid.

Dies trifft in gewissem Umfang auch auf die übrigen physikalischen Treibmittel zu, deren Emission etwa in der Bundesrepublik Deutschland durch die Technische Anleitung Luft und in vielen anderen Ländern in ähnlicher Weise stark eingeschränkt ist.

Die Rohdichte flexibler Polyurethanweichschaumstoffe liegt im allgemeinen zwischen 14 und 50 kg/m$^3$. Typische Werte für die Stauchhärte (DIN 53577) (bei 40 %iger Stauchung) sind 1,0 bis 6,0 kPa. Reduziert man die bei der Verschäumung eingesetzte Menge Treibmittel, resultieren Schäume mit vergleichsweise höherer Dichte und Stauchhärte. Dieser Erhöhung der Dichte kann man durch Erhöhung der Menge des zugesetzten Wassers entgegenwirken, die Stauchhärte verbleibt hierbei jedoch auf dem unerwünscht hohen Niveau.

Der vorliegenden Erfindung liegt das technische Problem zugrunde, ein Verfahren zu finden, das es ermöglicht, unter Reduzierung des Anteils physikalischer Treibmittel, insbesondere an Fluorchlorkohlenwasserstoffen oder Methylenchlorid, und mit gegebenenfalls tolerierbarer Erhöhung des Wasserzusatzes flexible Polyurethanschäume mit - für das resultierende Raumgewicht - niedriger Stauchhärte herzustellen.

Aus der EP-A-0 358 282 ist es bekannt, daß man bei einem Verfahren der eingangs geschilderten Art die Menge an einzusetzenden Fluorchlorkohlenwasserstoffen reduzieren kann, wenn man die Verschäumung in Gegenwart von 0,001 bis 1 Gew.-Teilen, bezogen auf 100 Gew.-Teile Polyol, eines oder mehrerer unvernetzter, wasserlöslicher organischer Polyelektrolyte mit einem Molgewicht von 1000 bis 20 000 000 durchführt.

Bevorzugt sollen als Polyelektrolyte Alkalisalze von Polyacrylaten eines Molgewichtes von 2000 bis 10 000, in Mengen von 0,01 bis 0,5 Gew.-Teilen je 100 Gew.-Teile Polyol, verwendet werden.

Aus der US-A-4 430 490 ist ein Verfahren zur Herstellung von Polyetherpolyolen in Gegenwart eines alkalischen Katalysators bekannt. Der alkalische Katalysator wird anschließend mit einer Hydroxycarbonsäure neutralisiert. Weiter wird in der JP-A-63301236 die Verwendung von Zitronensäure oder ihren Salzen als fermentationshemmendes Mittel bei der Herstellung von Polyurethanschaumstoffen beschrieben.

Es ist auch bereits ein Produkt unter der Bezeichnung ORTEGOL 300 im Handel erhältlich, welches einen teilweisen Ersatz von physikalischen Treibmitteln, wie z. B. Fluorchlorkohlenwasserstoffen, bei der Polyurethanverschäumung ermöglicht. Das Produkt ist eine Abmischung verschiedener Wirkstoffe und weist einen pH-Wert > 12 auf. Hierdurch ergeben sich mitunter Korrosionsprobleme bei der Lagerung und Anwendung sowie eine Tendenz zur Separation der Einzelkomponenten.

Der vorliegenden Erfindung liegt die Lösung des technischen Problems zugrunde, ein Verfahren zur Herstellung von flexiblen Polyurethanweichschäumen zu finden, bei dem

die Verwendung physikalischer Treibmittel allgemein, insbesondere aber Fluorchlorkohlenwasserstoffen und auch Methylenchlorid vermieden oder zumindest erheblich eingeschränkt werden kann,

die resultierenden Schäume das gewünschte niedrige Raumgewicht bei verminderter Stauchhärte aufweisen und wobei
durch das neue Additiv weder Dosier- noch Korrosionsprobleme verursacht werden.

Die Lösung dieses technischen Problems gelingt erfindungsgemäß durch die Verwendung von Alkali- oder Erdalkalisalzen von Hydroxycarbonsäuren, wobei die Alkali- oder Erdalkalisalze in Mengen von 0,01 bis 1,0 Gew.-Teilen, bezogen auf 100 Gew.-Teile Polyol, in der Polyolkomponente enthalten sind.

Es ist auch möglich, Mischungen von Salzen der Hydroxycarbonsäuren zu verwenden. Weist die Hydroxycarbonsäure mehr als eine Carboxylgruppe auf, können sowohl die vollständig als auch die partiell neutralisierten Verbindungen verwendet werden.

Vorzugsweise verwendet man die Salze der Äpfelsäure, der Weinsäure, der Zitronensäure und der Milchsäure.

Als Salze sind die Alkalisalze und insbesondere die Natriumsalze der Hydroxycarbonsäure bevorzugt.

Die Salze der Hydroxycarbonsäure werden in Mengen von 0,01 bis 1,0 Gew.-Teilen, bezogen auf 100 Gew.-Teile Polyol, verwendet. Vorzugsweise verwendet man 0,05 bis 0,8 Gew.-Teile Salze der Hydroxycarbonsäure.

Es ist bereits bekannt, Salze von Hydroxycarbonsäuren bei der Herstellung von Polyurethanweichschäumen in wesentlich höheren Konzentrationen und zu anderen Zwecken einzusetzen.

So ist in der japanischen Offenlegungsschrift JP 63301239 die Verwendung von Hydroxycarbonsäuresalzen bei der Herstellung von Polyurethanweichschäumen, die in der Lebensmittelverpackung eingesetzt werden, beschrieben. Die Einsatzkonzentrationen liegen bei 5 Gew.-Teilen, bezogen auf 100 Gew.-Teile Polyol.

In der EP-A-0 075 424 sind Salze der Hydroxycarbonsäure als Rauchgasverminderer für flammgeschützte, flexible Polyurethanschaumstoffe genannt. Auch hier ist die notwendige Konzentration > 5 Gew.-Teile.

Beiden Veröffentlichungen konnte somit die erfindungsgemäße Lehre weder entnommen werden, noch wurde sie durch diese Veröffentlichungen nahegelegt.

Aus den folgenden Tabellen 1 und 2 ergibt sich die Abhängigkeit der Dichte und der Stauchhärte eines Polyurethanweichschaumes vom Gehalt an Wasser, Fluorchlorkohlenwasserstoff als Treibmittel und erfindungsgemäß zugesetztem Natriumsalz der Weinsäure:

Tabelle 1

| Rezeptur | Polyol Teile | Diisocyanat Teile | FCKW | Wasser | Dinatriumtartrat |
|---|---|---|---|---|---|
| 1 | 100 | 56,4 | - | 4,8 | 0 |
| 2 | 100 | 47,3 | 8 | 3,9 | 0 |
| 3 | 100 | 56,4 | - | 4,8 | 0,4 |
| 4 | 100 | 38,1 | - | 3,0 | 0 |
| 5 | 100 | 31,0 | 6 | 2,3 | 0 |
| 6 | 100 | 38,1 | - | 3,0 | 0,4 |
| 7 | 100 | 27,4 | 11 | 1,9 | 0 |
| 8 | 100 | 34,7 | 4 | 2,6 | 0,4 |

Tabelle 2

| Rezeptur | Raumgewicht | Stauchhärte (40 % Stauchung) |
|---|---|---|
| 1 | 21 kg/m$^3$ | 3,1 kPa |
| 2 | 21 kg/m$^3$ | 2,0 kPa |
| 3 | 21 kg/m$^3$ | 2,1 kPa |
| 4 | 31 kg/m$^3$ | 2,9 kPa |
| 5 | 31 kg/m$^3$ | 2,0 kPa |
| 6 | 31 kg/m$^3$ | 2,0 kPa |
| 7 | 32 kg/m$^3$ | 1,8 kPa |
| 8 | 32 kg/m$^3$ | 1,9 kPa |

Aus den Tabellen 1 und 2 ist der Vorteil des erfindungsgemäßen Verfahrens klar erkennbar: Durch den Zusatz des Dinatriumtartrates kann auf die Verwendung von FCKW ganz oder teilweise verzichtet werden, wobei die Stauchhärte der erhaltenen Schäume bei gleichem Raumgewicht praktisch unverändert bleibt.

Zur Durchführung des erfindungsgemäßen Verfahrens ist es zweckmäßig, eine konzentrierte wäßrige Lösung der Salze der Hydroxycarbonsäuren herzustellen. Da die Löslichkeit dieser Salze in Wasser sehr gut ist, kann man 20 bis 50 gew.-%ige Lösungen herstellen, die dann zweckmäßig bei der Durchführung des Verfahrens separat oder der sogenannten Aktivatorlösung, bestehend aus Wasser, Stabilisator und Aminkatalysator, oder dem Polyol oder einer Teilmenge eines Polyols zugegeben werden. Die hierdurch in das System eingebrachte Wassermenge ist gering und kann überdies bei der für die Verschäumung benötigten Menge Wasser berücksichtigt werden.

Die wäßrigen Lösungen der Salze der Hydroxycarbonsäuren reagieren weitgehend neutral, so daß keine zusätzlichen Korrosionsprobleme geschaffen werden.

Der Verarbeitungsspielraum innerhalb der Rezeptur ist ausreichend groß, um eine reproduzierbare Arbeitsweise mit reproduzierbaren Produkteigenschaften zu gewährleisten.

Durch den Zusatz der Salze der Hydroxycarbonsäuren im angegebenen Konzentrationsbereich werden, abgesehen von der Stauchhärte, die übrigen Eigenschaften der Polyurethanweichschäume nicht beeinträchtigt.

Im übrigen kann das Verfahren zur Herstellung der Polyurethanweichschäume in üblicher Weise und mit den aus dem Stand der Technik bekannten Ausgangsstoffen durchgeführt werden.

Für die Herstellung der Polyurethan-Weichformschaumstoffe werden als Ausgangskomponenten eingesetzt:

Aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q(NCO)_n$$

in der
n = 2 - 4, vorzugsweise 2,
und
Q einen aliphatischen Kohlenwasserstoffrest mit 2 - 18, vorzugsweise 6 - 10 C-Atomen,
einen cycloaliphatischen Kohlenwasserstoffrest mit 4 - 15, vorzugsweise 5 - 10 C-Atomen,
einen aromatischen Kohlenwasserstoffrest mit 6 - 15, vorzugsweise 6 - 13 C-Atomen,
oder einen araliphatischen Kohlenwasserstoffrest mit 8 - 15, vorzugsweise 8 - 13 C-Atomen,
bedeuten, z. B. solche Polyisocyanate, wie sie in der DE-OS 28 32 253, Seiten 10 - 11, beschrieben werden.

Bevorzugt werden erfindungsgemäß Polyisocyanate vom Typ des Diphenylmethandiisocyanates und/oder des Toluylendiisocyanats, z. B. das 2,4-und 2,6-Toluylendiisocyanat, sowie beliebige Gemische dieser Isomeren (TDI); 4,4'- und/oder 2,4'-Diphenylmethandiisocyanat (MDI), Hexamethylendiisocyanat und/oder Isophorondiisocyanat, Polyphenylpolymethylen-polyisocyanate, wie sie durch Anilin-Formaldehyd-Kondensation und anschließende Phosgenierung hergestellt werden ("rohes MDI"), ferner durch Carbodiimidgruppen, Urethangruppen, Allophanatgruppen, Isocyanuratgruppen, Harnstoffgruppen und Biuretgruppen modifizierte Polyisocyanate, die sich von 2,4- und/oder 2,6-Toluylendiisocyanat bzw. vom 4,4'- und/oder 2,4'-Diphenylmethandiisocyanat und/oder Hexamethylendiisocyanat und/oder Isophorondiisocyanat ableiten, ferner alkylsubstituierte MDI-Typen, wie sie beispielsweise in DE-OS 29 35 318 und DE-OS 30 32 128 beschrieben werden.

Als erfindungsgemäß einzusetzende Polyisocyanate kommen vorzugsweise folgende TDI-Typen in Betracht:
- Toluylendiisocyanat als Gemisch der 2,4- und 2,6-Isomeren im Verhältnis 80 : 20 (T 80)
- Toluylendiisocyanat als Gemisch der 2,4- und 2,6-Isomeren im Verhältnis 65 : 35 (T 65)
- Toluylendiisocyanat-Prepolymere
- Abmischungen von TDI mit Diphenylmethandiisocyanat und/oder Polyphenylpolymethylen-polyisocyanaten.

Die geeigneten Polyole haben ein Molekulargewicht von 400 bis 12 000 und eine Funktionalität von vorzugsweise 2 bis 8, wobei Polyetherpolyole mit endständigen Hydroxylgruppen bevorzugt sind. Die Polyole werden im allgemeinen dadurch hergestellt, daß man an niedermolekulare, mehrwertige Alkohole, wie Glycerin oder Trimethylolpropan, Ethylenoxid und/oder Propylenoxid anlagert.

Weitere Polyole sind dem Fachmann bekannt und können zum Beispiel der EP-A-0 380 993 entnommen werden.

Als Katalysator verwendet man im allgemeinen Amine, wie Triethylendiamin, Bis-(2-dimethylaminoethyl)ether, N,N-Dimethylethanolamin, N,N,N',N'',N''-Pentamethyldiethylentriamin, N-Methylmorpholin, Dimethylbenzylamin, tertiäre Alkylphosphine, Zinn-II-oktoat, DibutylzinnIV-dilaurat, sowie Chelate von Metallen, wie z. B. Chelate des Acetylacetonates von Magnesium, Zirkon oder Nickel. Der Katalysator wird in Mengen von 0,01 bis 1,0 Gew.-Teilen, bezogen auf 100 Gew.-Teile Polyol, verwendet.

Weitere übliche Zusatzstoffe sind Flammschutzmittel, Füllstoffe, Pigmente, Weichmacher, Antistatika und Zellregulierungsmittel. Diese und weitere Hilfsmittel sind dem Fachmann bekannt.

In den folgenden Beispielen wird zunächst an verschiedenen Rezepturen die Herstellung von Polyurethanweichschäumen nach dem Verfahren des Standes der Technik und dem erfindungsgemäßen Verfahren gezeigt. Es werden dabei die Eigenschaften der erhaltenen Schaumstoffe näher erläutert:

Hierbei wurden folgende Produkte eingesetzt und Produktbezeichnungen verwendet:

| | |
|---|---|
| Polyol A: | handelsübliches Polyol mit sekundären OH-Endgruppen und einem Ethylenoxidgehalt von ca. 11 %, OHZ ≈ 48, MW ≈ 3500 g/Mol. |
| Polyol B: | handelsübliches Polyol mit sekundären OH-Endgruppen auf der Basis von ausschließlich Propylenoxid, OHZ ≈ 48, MW ≈ 3500 g/Mol. |
| Polyol C: | handelsübliches Polyol mit überwiegend primären OH-Endgruppen, welches eine sedimentationsstabile Polyharnstoffdispersion als füllstoff enthält (sogenanntes PHD-Polyol); OHZ ≈ 28. |
| Polyol D: | handelsübliches Polyol mit überwiegend primären OH-Endgruppen, welches eine sedimentationsstabile Dispersion eines Copolymeren auf Basis Styrol und Acrylnitril enthält (sogenanntes Polymer-Polyol); OHZ ≈ 30. |
| Polyol E: | handelsübliches Polyol mit überwiegend primären OH-Endgruppen, welches eine sedimentationsstabile Dispersion (hergestellt durch in-situ-Reaktion eines Isocyanates mit einem Alkanolamin) enthält (sogenanntes PIPA-Polyol); OHZ ≈ 28 |
| Polyol F: | handelsübliches Polyol mit überwiegend primären OH-Endgruppen; OHZ ≈ 36. |
| TEGOSTAB BF 2370: | handelsüblicher Schaumstabilisator |
| TEGOSTAB B 3136: | handelsüblicher Schaumstabilisator |
| TEGOSTAB B 8681: | handelsüblicher Schaumstabilisator |
| F 11: | Trichlorfluormethan |
| $CH_2Cl_2$: | Methylenchlorid |
| Desmodur T 80: | handelsübliches Toluylendiisocyanat, charakterisiert durch ein Isomerenverhältnis von 2,4- zu 2,6- von 80 : 20 |
| Desmodur T 65: | handelsübliches Toluylendiisocyanat, charakterisiert durch ein Isomerenverhältnis von 2,4- zu 2,6- von 65 : 35 |
| Melamin: | handelsübliches Melamin, mittlere Teilchengröße von 20 $\mu$m |
| Glycerin: | handelsübliche Qualität |
| DEOA: | N,N-Diethanolamin |
| ORTEGOL 204: | handelsüblicher Vernetzer gemäß DE-PS 25 07 161 und 26 03 498 |
| TEGOAMIN BDE: | 70 %ige Lösung von Bis(2-dimethylaminoethyl)ether in Dipropylenglykol |
| TEGOAMIN 33: | 33 %ige Lösung von Triethylendiamin in Dipropylenglykol |
| TEGOAMIN SMP: | handelsüblicher Aminkatalysator |
| TEGOAMIN PTA: | handelsüblicher Aminkatalysator |
| TEGO ANTIFLAMM: | handesübliches Flammschutzmittel auf der Basis von chlorierten Phosphorsaureestern |
| KOSMOS 29: | Zinn-II-octoat |
| KOSMOS 19: | Dibutylzinn-IV-dilaurat. |

Bei den Formulierungen, welche erfindungsgemäß Salze von Hydroxycarbonsäuren enthalten, wird jeweils 1 Gew.-% einer wäßrigen Lösung zugesetzt, wobei die hierdurch eingebrachte Wassermenge bei der Wassermenge (gesamt) berücksichtigt wird. Die folgenden Lösungen sind in ihrer Wirkung gleichwertig und können beliebig gegeneinander ausgetauscht werden:

Tabelle 3

| Salz der Hydroxycarbonsäure | gew.-%ige wäßrige Lösung |
|---|---|
| Natriumlactat | 20 |
| Dinatriumtartrat | 40 |
| Mononatriumsalz der Äpfelsäure | 20 |
| Dinatriumsalz der Äpfelsäure | 10 |
| Dinatriumsalz der Zitronensäure | 25 |
| Trinatriumsalz der Zitronensäure | 12 |
| Natriumsalz der Mandelsäure | 65 |
| Mischung aus Natriumlactat und Mononatriumsalz der Äpfelsäure 1 : 1 | 20 |
| Mischung aus Dinatriumtartrat und Trinatriumsalz der Zitronensäure 2 : 1 | 30 |
| Mischung aus Dinatriumtartrat und Dinatriumsalz der Äpfelsäure 2 : 1 | 30 |

Die Herstellung der Schaumstoffe erfolgt gemäß der sogenannten Methode der Handverschäumung. Dabei werden alle Komponenten bis auf das Isocyanat und gegebenenfalls das physikalische Treibmittel 60 Sekunden bei 1000 Umdrehungen/Minute vorgerührt. Anschließend werden das Isocyanat und gegebenenfalls das Treibmittel zugesetzt und weitere sieben Sekunden bei 2500 Umdrehungen/Minute gerührt. Die flüssige Mischung wird dann in einen oben offenen Behälter der Abmessung 30 cm x 30 cm x 30 cm gegeben, so daß der Schaum frei aufsteigen kann.

Die Bestimmung des Raumgewichtes und der Stauchhärte des Schaumes erfolgt nach 72stündiger Lagerung im Normklima, d.h. 23 ± 1 °C und 50 ± 2 % relative Luftfeuchtigkeit. Die Ermittlung der Stauchhärte erfolgt nach DIN 53 577 bei 40 %iger Stauchung.

## Tabelle 4

Formulierungen (Angaben in Gew.-%)

| | 1 | 2 | 3 | 4 | 5 | 6 | 7 |
|---|---|---|---|---|---|---|---|
| Polyol A | 100 | 100 | 100 | - | - | 100 | 100 |
| Polyol B | - | - | - | 100 | 100 | - | - |
| Wasser (gesamt) | 4,8 | 3,9 | 4,8 | 4,8 | 4,8 | 3,0 | 2,3 |
| Tegostab BF 2370 | 1,0 | 1,4 | 1,6 | 1,0 | 1,6 | 0,8 | 1,0 |
| F 11 | - | 8 | - | - | - | - | 6 |
| $CH_2Cl_2$ | - | - | - | - | - | - | - |
| Tegoamin 33 | - | - | - | - | - | - | - |
| Tegoamin PTA | 0,15 | 0,25 | 0,10 | 0,15 | 0,10 | 0,25 | 0,35 |
| Tegoamin SMP | - | - | - | - | - | - | - |
| Kosmos 29 | 0,25 | 0,25 | 0,25 | 0,25 | 0,25 | 0,22 | 0,22 |
| Desmodur T 80 | 56,4 | 47,3 | 56,4 | 56,4 | 56,4 | 38,1 | 31,1 |
| Tego Antiflamm | - | - | - | - | - | - | - |
| erfindungsgemäße Verbindung | - | - | 1,0 | - | 1,0 | - | - |
| Raumgewicht (kg/m³) | 21,4 | 20,8 | 21,2 | 21,2 | 21,0 | 31,8 | 31,4 |
| Stauchhärte (kPa) | 3,1 | 2,0 | 2,0 | 3,2 | 2,1 | 3,1 | 1,9 |

EP 0 475 242 B1

EP 0 475 242 B1

Tabelle 4 - Fortsetzung

Formulierungen (Angaben in Gew.-%)

| | 8 | 9 | 10 | 11 | 12 | 13 | 14 | 15 |
|---|---|---|---|---|---|---|---|---|
| Polyol A | 100 | 100 | 100 | 100 | 100 | 100 | 100 | 100 |
| Polyol B | - | - | - | - | - | - | - | - |
| Wasser (gesamt) | 3,0 | 1,9 | 2,6 | 4,5 | 5,3 | 4,0 | 3,3 | 4,0 |
| Tegostab BF 2370 | 1,0 | 1,0 | 1,2 | 1,8 | 2,0 | 1,0 | 1,2 | 1,4 |
| F 11 | - | 11 | 4 | - | - | - | 7 | - |
| $CH_2Cl_2$ | - | - | - | 15 | 5 | - | - | - |
| Tegoamin 33 | - | 0,6 | 0,4 | - | - | - | - | - |
| Tegoamin PTA | 0,20 | - | - | - | - | 0,20 | 0,30 | 0,20 |
| Tegoamin SMP | - | - | - | 0,30 | 0,20 | - | - | - |
| Kosmos 29 | 0,22 | 0,05 | 0,18 | 0,35 | 0,27 | 0,22 | 0,22 | 0,22 |
| Desmodur T 80 | 38,1 | 27,4 | 34,7 | 53,4 | 61,5 | 48,3 | 41,2 | 48,3 |
| Tego Antiflamm | - | - | - | - | - | 8 | 8 | 8 |
| erfindungsgemäße Verbindung | 1,0 | - | 1,0 | - | 1,0 | - | - | 1,0 |
| Raumgewicht (kg/m³) | 31,7 | 31,0 | 31,0 | 15,7 | 16,7 | 25,9 | 25,8 | 26,0 |
| Stauchhärte (kPa) | 2,0 | 1,6 | 1,7 | 1,6 | 1,8 | 2,9 | 1,9 | 2,0 |

**Tabelle 4 – Fortsetzung**

**Formulierungen** (Angaben in Gew.-%)

| | 16 | 17 |
|---|---|---|
| Polyol F | 100 | 100 |
| Wasser (gesamt) | 3,1 | 3,1 |
| Tegostab B 3136 | 1,1 | 1,1 |
| Tegoamin PTA | 0,30 | 0,25 |
| Kosmos 29 | 0,28 | 0,28 |
| Desmodur T 65 | 38,65 | 38,65 |
| Glycerin | 0,30 | 0,30 |
| erfindungsgemäße Verbindung | - | 1,0 |
| Raumgewicht (kg/m³) | 32,3 | 32,4 |
| Stauchhärte (kPa) | 4,2 | 3,4 |

Die Wirkungsweise der erfindungsgemäß zu verwendenden Verbindungen wird in den Beispielen 1 bis 3 verdeutlicht:

Bei Verwendung von 4,8 Gew.-Teilen Wasser erhält man einen Schaum mit Raumgewicht 21,4 kg/m³ und einer Stauchhärte von 3,1 kPa (Beispiel 1). Das gleiche Raumgewicht wird erzielt, wenn man 3,9 Gew.-Teile Wasser in Kombination mit 8 Gew.-Teilen F 11 einsetzt, jedoch ist dieser Schaum ca. 30 % weicher (Stauchhärte 2,0 kPa, Beispiel 2). Um sowohl das Raumgewicht als auch die niedrige Stauchhärte ohne Mitverwendung von physikalischen Treibmitteln zu erhalten, ist der höhere Wassergehalt des Beispiels 1 und die Verwendung der erfindungsgemäßen Verbindungen erforderlich (Beispiel 3).

Anders ausgedrückt können 8 Gew.-Teile F 11 durch die Kombination eines höheren Wassergehaltes und dem weichmachenden Additiv ersetzt werden.

Die Beispiele 5 und 6 zeigen, daß dies unabhängig von der Art des Polyols ist.

Dies trifft auch für die Beispiele 16 und 17 zu, wo darüber hinaus noch gezeigt werden kann, daß auch mit einem unterschiedlichen Isocyanat die gewünschte Stauchhärteverringerung eintritt.

Den Formulierungen 9 und 10 bzw. 11 und 12 ist zu entnehmen, daß auch Kombinationen der erfindungsgemäßen Verbindungen mit physikalischen Treibmitteln möglich sind, so daß dadurch deren Einsatzmenge auf ein Mindestmaß eingeschränkt werden kann.

Die Beispiele 13 bis 15 belegen, daß die zusätzliche Hinzunahme eines Flammschutzmittels keine Beeinflussung der Stauchhärteverminderung bewirkt.

Die Beispiele 1, 2, 4, 6, 7, 9, 11, 13, 14 und 16, die die erfindungsgemäß zu verwendenden Verbindungen nicht enthalten, dienen als Vergleichsbeispiele.

Tabelle 5  
Formulierungen  (Angaben in Gew.-%)

| | 18 | 19 | 20 | 21 | 22 | 23 | 24 | 25 | 26 |
|---|---|---|---|---|---|---|---|---|---|
| Polyol C | 100 | 100 | - | - | - | - | - | - | - |
| Polyol D | - | - | 100 | 100 | - | - | - | - | - |
| Polyol E | - | - | - | - | 100 | 100 | - | - | - |
| Polyol F | - | - | - | - | - | - | 100 | 100 | 100 |
| Wasser (gesamt) | 3,5 | 3,5 | 3,0 | 3,0 | 2,5 | 2,5 | 3,5 | 3,5 | 2,7 |
| F 11 | - | - | - | - | - | - | - | - | 8 |
| DEOA | 1,1 | 1,1 | 0,7 | 0,7 | 0,13 | 0,13 | 0,5 | 0,5 | 0,5 |
| Ortegol 204 | - | - | - | - | - | - | 3,0 | 3,0 | 3,0 |
| Kosmos 29 | 0,15 | 0,15 | - | - | - | - | 0,15 | 0,15 | 0,15 |
| Kosmos 19 | - | - | 0,1 | 0,1 | 0,05 | 0,05 | - | - | - |
| Tegoamin BDE | 0,04 | 0,04 | 0,04 | 0,04 | 0,14 | 0,14 | 0,08 | 0,1 | 0,12 |
| Tegoamin 33 | 0,3 | 0,3 | 0,15 | 0,15 | - | - | 0,3 | 0,3 | 0,4 |
| Tegostab B 8681 | 0,8 | 0,8 | 0,8 | 0,8 | 0,5 | 0,5 | 0,8 | 0,8 | 0,8 |
| Tego Antiflamm | 5 | 5 | 5 | 5 | 5 | 5 | 5 | 5 | 5 |
| Desmodur T 80 | 44,6 | 44,6 | 35,6 | 35,6 | 34,6 | 34,6 | 44,7 | 44,7 | 37,0 |
| Melamin | 25 | 25 | 25 | 25 | 25 | 25 | 25 | 25 | 25 |
| erfindungsgemäße Verbindung | - | 1,0 | - | 1,0 | - | 1,0 | - | 1,0 | - |
| Raumgewicht (kg/m³) | 31,6 | 32,3 | 37,0 | 37,4 | 42,0 | 41,4 | 32,0 | 31,8 | 32,2 |
| Stauchhärte (kPa) | 3,2 | 2,1 | 4,8 | 3,5 | 4,6 | 3,2 | 2,9 | 2,0 | 2,0 |

Die Versuche 18 bis 26 zeigen, daß auch in Formulierungen auf Basis hochreaktiver Polyole und Vernetzer durch Zugabe der erfindungsgemäßen Verbindungen eine signifikante Verminderung der Stauchhärte erfolgt und zwar wiederum unabhängig von dem jeweiligen Wassergehalt der Rezeptur. Die Beispiele 18, 20, 22, 24 und 26 sind Vergleichsbeispiele.

Auch bei Zugabe härtesteigernder Additive, wie z.B. Melamin, kann durch Verwendung der erfindungsgemäßen Zusätze die Herstellung weicher Schäume erfolgen.

**Patentansprüche**

1. Verwendung von Alkali- oder Erdalkalisalzen von Hydroxycarbonsäuren zur Herstellung von flexiblen, Urethangruppen aufweisenden Schaumstoffen mit verminderter Stauchhärte, die erhalten werden durch Umsetzung von mindestens zwei Hydroxylgruppen aufweisenden Polyethern eines Molekulargewichtes von 400 bis 12 000 mit Polyisocyanaten in Gegenwart von Katalysatoren und Wasser und gegebenenfalls in Gegenwart von Emulgatoren, Stabilisatoren, Vernetzungsmitteln, Treibmitteln und üblichen Hilfs- und Zusatzmitteln, wobei die Alkali- oder Erdalkalisalze in Mengen von 0,01 bis 1,0 Gew.-Teilen, bezogen auf 100 Gew.-Teile Polyol, in der Polyolkomponente enthalten sind.

**Claims**

1. Use of alkali metal or alkaline-earth metal salts of hydroxycarboxylic acids for the production of flexible, urethane group-containing foams of reduced compressive strength which are obtained by reacting polyethers containing at least two hydroxyl groups and having a molecular weight of from 400 to 12,000 with polyisocyanates in the presence of catalysts and water and optionally in the presence of emulsifiers, stabilizers, crosslinking agents, blowing agents and conventional auxiliaries and additives, where the alkali metal salts or alkaline-earth metal salts are present in the polyol component in amounts of from 0.01 to 1.0 parts by weight, based on 100 parts by weight of polyol.

**Revendications**

1. Utilisation de sels alcalins ou alcalino-terreux d'acides hydroxycarboxyliques pour la préparation de mousses souples contenant des groupes d'uréthane et ayant une résistance réduite à la compression, qu'on obtient grâce à la mise en réaction de polyéthers contenant au moins deux groupes hydroxyles, d'un poids moléculaire de 400 à 12 000, avec des polyisocyanates, en présence de catalyseurs et d'eau et éventuellement en présence d'émulsifiants, de stabilisants, d'agents de réticulation, d'agents moussants et d'adjuvants et d'additifs usuels, les sels alcalins ou alcalino-terreux étant contenus dans le composant polyol en des quantités de 0,01 à 1,0 partie en poids pour 100 parties en poids de polyol.